# EUROPEAN PATENT APPLICATION

(11) **EP 4 706 470 A1**
(43) Date of publication of application: **11.03.2026**
(21) Application number: 24205705.7
(22) Date of filing: 09.10.2024
(51) Int. Cl.: A47J 37/06

(54) **AIR FRYER**

(30) Priority: 06.09.2024 CN 202411246158
(71) Applicant: Ningbo Zhonghong Intelligent Technology Co., Ltd., Cixi Zhejiang 315318 (CN)
(72) Inventor: YANG, Qunhui, Cixi 315318 (CN)
(74) Representative: Bayramoglu et al.

(57) **Abstract**

The present invention discloses an air fryer, which comprises a fryer body and at least one heating assembly, connected at a side of the fryer body away from the insertion opening and disposed corresponding to the cooking compartment, and the heating assembly comprises an electric heating element and a fan assembly, and the fan assembly has an air outlet channel and an air outlet disposed on the air outlet channel; at least one compensation heat source, disposed at a top of the cooking compartment and opposed to the air outlet to heat an airflow from the air outlet to compensate a heat loss of the airflow. The air fryer can compensate the energy loss in transmission process of heat, so as to improve the baking efficiency and food tastes.

## Description

### TECHNICAL FIELD

The present disclosure relates to the technical field of kitchen appliances and in particular to an air fryer.

### BACKGROUND

The air fryers are cooking devices which can heat an airflow rapidly with a heating element and enable the heated air flow to contact with foods by using a large-power fan so as to achieve frying effect on the foods. Because the foods prepared by the air fryers feature good taste, less oil and less harmful substances, the air fryers become very popular with the people. Therefore, the air fryers have been gradually accepted by common families and hence brought much convenience to the lives of the people.

In the related arts, the air fryers may comprise single-basket air fryers and double-basket air fryers. The single-basket air fryers have only one heating assembly. In contrast, the double-basket air fryers, especially those double-basket air fryers with up-down double stack design usually have two heating assemblies, and each heating assembly comprises an electric heating element and a fan. The electric heating element is usually an electric heating wire or electric heating tube. The fan is used to blow the heat generated by the electric heating element to a liner or a food cooking compartment to bake the foods. In the related arts, for the air fryers, especially for the double-basket air fryers, in order to expand the space of the cooking compartment, the heating assembly is usually disposed at a back side of the air fryers or at a side away from a user, and the hot air blown out by the fan runs through an air outlet channel into the cooking compartment. Specifically, the air outlet channel is vertically disposed at a back side of the cooking compartment, and an upper end of the air outlet channel is in communication with the top of the cooking compartment. In this case, the fan blows up the hot airflow generated around the heating element through the air outlet channel to the top of the cooking compartment, and the hot airflow moves down from the top of the cooking compartment so as to bake the foods in the cooking compartment as the double-basket air fryer disclosed in the patent application with the publication number CN117562428A.

In the related arts, the air fryers have the following shortcomings during practical applications: the electric heating element and the fan of the heating assembly are both disposed at the back side of the cooking compartment or at the side of the air fryers away from the user, and the fan blows up the hot airflow generated by the electric heating element through the air outlet channel to the top of the cooking compartment, and then the hot airflow moves down from the top of the cooking compartment to the surfaces of the foods. In this way, the transmission time of the hot airflow is longer and the energy loss is larger. In other words, the hot airflow takes a longer time to reach the surfaces of the foods from its generation due to longer heat transmission path, resulting in higher energy loss. Therefore, the air fryers in the related arts have low baking efficiency and produce poor taste for the baked foods.

### SUMMARY

In order to address the above shortcomings in the prior arts, the present disclosure provides an air fryer capable of compensating energy loss in transmission process of heat to improve the baking efficiency while providing good food tastes.

The technical solution of the present disclosure is to provide an air fryer with the following structure, which comprises:
a fryer body, having at least one cooking compartment and an insertion opening being in communication with the cooking compartment and provided for a frying basket to be pushed into or pulled out of the cooking compartment;
at least one heating assembly, connected at a side of the fryer body away from the insertion opening and disposed corresponding to the cooking compartment, where the heating assembly comprises an electric heating element and a fan assembly, and the fan assembly has an air outlet channel and an air outlet disposed on the air outlet channel;
at least one compensation heat source, disposed at a top of the cooking compartment and opposed to the air outlet to heat an airflow from the air outlet to compensate a heat loss of the airflow.

In some embodiments, the compensation heat source is connected at the top of the cooking compartment and close to the air outlet.

In some embodiments, a flow guide hood for guiding down the airflow is connected at the top of the cooking compartment, and the flow guide hood has an air inlet in communication with the air outlet; and the compensation heat source is disposed at the air inlet.

In some embodiments, the flow guide hood is circumferentially connected with a downward-extending baffle plate, and both ends of the baffle plate are connected with both sides of the air inlet and thus a flow guide chamber corresponding to the air inlet is enclosed with the baffle plate on the flow guide hood.

In some embodiments, a first flow guide plate is connected in the flow guide chamber; a first end of the first flow guide plate is disposed in the middle of the air inlet, and a second end of the first flow guide plate extends toward an end of the flow guide chamber away from the air inlet, so as to divide the flow guide chamber into a first flow guide chamber and a second flow guide chamber distributed left and right.

In some embodiments, the first flow guide plate is disposed as arc-shaped along an air incoming direction of the air inlet; a second flow guide plate for blocking at least a part of the airflow is connected in the first flow guide chamber, the second flow guide plate is disposed along a transverse direction of the first flow guide chamber, and a distance of an inner end of the second flow guide plate from the air inlet is greater than a distance of an outer end of the second flow guide plate from the air inlet. A third flow guide plate for blocking at least a part of the airflow is connected in the second flow guide chamber, and the third flow guide plate is disposed along a transverse direction of the second flow guide chamber, and further, a distance of an inner end of the third flow guide plate from the air inlet is greater than a distance of an outer end of the third flow guide plate from the air inlet.

In some embodiments, the fan assembly is connected at a side of the electric heating element away from the cooking compartment, and the fan assembly comprises a motor connected with the fryer body and wind blades disposed in the air outlet channel and connected with a rotary shaft of the motor; the electric heating element is disposed in the air outlet channel, and a through hole in communication with the cooking compartment is disposed on a sidewall of the air outlet channel close to the cooking compartment; the air outlet channel extends up along a height direction of the fryer body and an upper end of the air outlet channel is formed into the air outlet.

In some embodiments, the wind blades comprise at least two wind wheels axially arranged; or the wind blades comprise two axially-spaced annular plates, and a plurality of circumferentially-distributed arc-shaped vanes are connected between the two annular plates.

In some embodiments, there are two cooking compartments which are sequentially distributed along a height or width direction of the fryer body; there are two heating assemblies which are respectively disposed corresponding to the two cooking compartments; there are two compensation heat sources which are respectively connected at the tops of the two cooking compartments; the compensation heat sources may be electric heating tubes or electric heating wires.

In some embodiments, a recess is disposed on the housing and a control panel movable back and forth is connected rotatably in the recess.

In conclusion, compared with the related arts, the air fryer in the present disclosure has the following advantages: the fan assembly in the air fryer forms the heat generated by the electric heating element into a hot airflow and blows the hot airflow out of the air outlet through the air outlet channel, and it is unavoidable that the hot airflow suffers an amount of heat loss during the transmission process in the air outlet channel; however, in the air fryer of the present disclosure, a compensation heat source is disposed at a position corresponding to the air outlet and above the cooking compartment such that the compensation heat source can heat the airflow from the air outlet to compensate the heat loss of the airflow and thus the hot airflow at the top of the cooking compartment has a higher level of heat or energy; the hot airflow at the top of the cooking compartment can fast bake the foods upon moving down to the surfaces of the foods, so as to improve the baking efficiency and food tastes. Therefore, the air fryer can compensate the energy loss in transmission process of heat, so as to improve the baking efficiency and food tastes.

### BRIEF DESCRIPTIONS OF THE DRAWINGS

FIG. 1 is a structural schematic diagram illustrating an air fryer according to some embodiments of the present disclosure.
FIG. 2 is a sectional structural schematic diagram illustrating an air fryer according to some embodiments of the present disclosure.
FIG. 3 is a schematic diagram illustrating an interior structure of an air fryer according to some embodiments of the present disclosure.
FIG. 4 is a stereoscopic diagram illustrating a sectional structure of an air fryer according to some embodiments of the present disclosure.
FIG. 5 is a structural schematic diagram illustrating a heating assembly of an air fryer according to some embodiments of the present disclosure.
FIG. 6 is a structural schematic diagram illustrating a fan assembly of an air fryer according to some embodiments of the present disclosure.
FIG. 7 is a structural schematic diagram illustrating wind blades of a fan assembly of an air fryer according to some other embodiments of the present disclosure.
FIG. 8 is a structural schematic diagram illustrating a flow guide hood of an air fryer according to some embodiments of the present disclosure.
FIG. 9 is a structural schematic diagram of a flow guide hood of another angle of an air fryer according to some embodiments of the present disclosure.
FIG. 10 is a bottom schematic diagram illustrating a flow guide hood of an air fryer according to some embodiments of the present disclosure.
FIG. 11 is a back schematic diagram illustrating a frying basket of an air fryer according to some embodiments of the present disclosure.

### Numerals of the drawings are described below:

1. fryer body, 100. cooking compartment, 101. insertion opening, 102. recess, 103. liner, 2. frying basket, 200. vent hole, 3. heating assembly, 300. electric heating element, 301. fan assembly, 302. motor, 303. wind blade, 304. through hole, 305. annular plate, 306. vane, 307. wind wheel, 4. air outlet channel, 400. air outlet, 5. flow guide hood, 500. air inlet, 501. baffle plate, 502. first flow guide plate, 503. second flow guide plate, 504. air blocking part, 505. third flow guide plate, 506. first flow guide chamber, 507. second flow guide chamber, 6. control panel, 7. compensation heat source.

### DETAILED DESCRIPTIONS OF EMBODIMENTS

The present disclosure will be further detailed below in combination with drawings and specific embodiments.

In the descriptions of embodiments of the present disclosure, it is understood that the orientation or positional relationship indicated by the terms such as "longitudinal", "transverse", "width", "thickness", "upper", "lower", "front", "rear", "vertical", "top" and "bottom" and the like is based on the orientation or positional relationship shown in the drawings and used only for ease of descriptions and simplification of descriptions and does not indicate or imply that the indicated devices or elements must have a particular orientation, or be constructed or operated in a particular orientation. Therefore, such terms shall not be understood as limiting of the present disclosure.

Furthermore, the terms "first" and "second" are used for descriptions only and shall not be understood as indicating or implying relative importance or implicitly indicating the number of the indicated features. As a result, the features defined by "first" and "second" may explicitly or implicitly include one or more of the features. In the descriptions of the present disclosure, the "several" refers to two or more, unless otherwise clearly stated.

In the present disclosure, unless otherwise clearly stated or defined, the terms "mount", "connect", "couple", and "fix" and the like shall be understood in a broad sense, for example, may be fixed connection, or detachable connection, or formed into one piece; or may be mechanical connection, or direct connection or indirect connection through an intermediate medium, or may be internal communication between two elements. Those skilled in the art may understand the specific meanings of the above terms in the present disclosure according to actual situations.

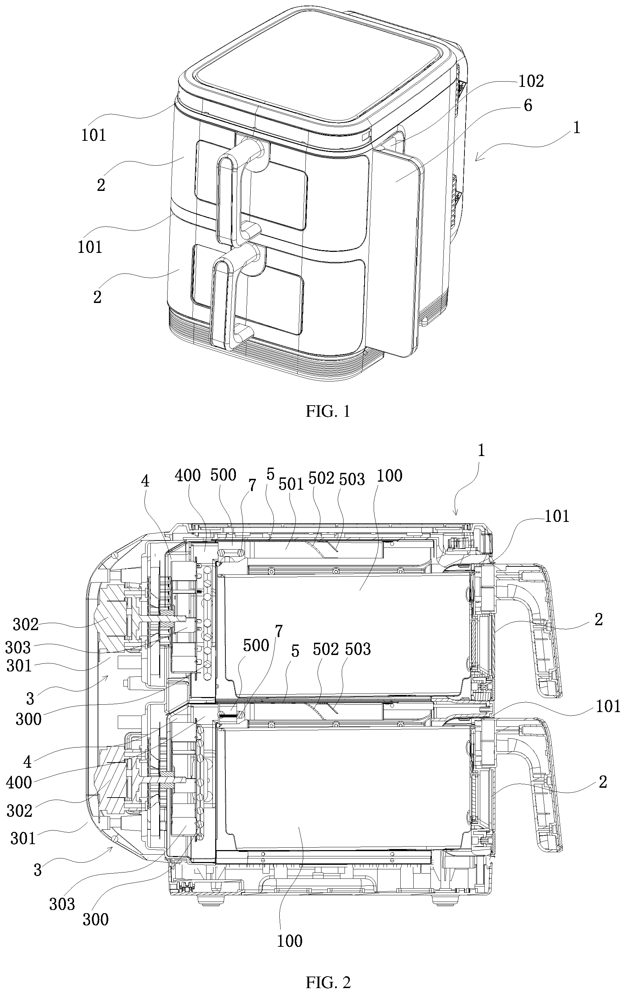

With reference to FIGS. 1 to 11, an embodiment of the present disclosure provides an air fryer, which structurally comprises a fryer body 1 and frying baskets 2. The fryer body 1 comprises a housing, an electric control unit connected to the housing, a control panel 6, and a liner 103 connected in the housing. The fryer body 1 comprises at least one cooking compartment 100, and the cooking compartments 100 are formed in a space defined by the liner 103. Insertion openings 101 which are in communication with respective cooking compartments 100 and provided for the frying baskets 2 to be pushed into or pulled out of the cooking compartments 100 are disposed at a user side of the fryer body 1, and the insertion openings 101 match in number with the cooking compartments 100. At least one heating assembly 3 corresponding to the cooking compartments 100 is connected in the fryer body 1, namely, one cooking compartment 100 corresponds to one heating assembly 3.

In this embodiment, each heating assembly 3 comprises an electric heating element 300 and a fan assembly 301. As shown in FIGS. 2, 3 and 4, the fan assembly 301 is connected at a side of the fryer body 1 away from the insertion opening 101, and communicated with the cooking compartment 100. In other words, the fan assembly 301 is connected at a back side of the fryer body 1 or at a side away from the user, or disposed at a side opposed to the side where the insertion opening 101 of the fryer body 1 is located. The fan assembly 301 has an upward-extending air outlet channel 4, and an air outlet 400 in communication with the top of the cooking compartment 100 is disposed on the air outlet channel 4. The electric heating element 300 is an electric heating wire or electric heating tube, which is shaped like planar hollow square or planar spiral. The electric heating element 300 is disposed between the fan assembly 301 and the cooking compartment 100, and accordingly, a through hole 304 communicating the cooking compartment 100 and the electric heating element 300 is disposed at a sidewall of the liner 103 of the cooking compartment 100 close to the electric heating element 300 such that the airflow in the cooking compartment 100 can run through the through hole 304 into the electric heating element 300 and the fan assembly 301. Then, the fan assembly 301 forms the heat generated by the electric heating element 300 into a hot airflow and blows up the hot airflow through the air outlet channel 4 and to the top of the cooking compartment 100 via the air outlet 400. The hot airflow at the top of the cooking compartment 100 moves down to the surfaces of the foods, and then runs through the through hole 304 into the heating assembly 3. Therefore, the cooking compartment 100, the heating assembly 3, the air outlet channel 4, the air outlet 400 and the cooking compartment 100 together form a hot airflow circulation path so as to perform cyclic heating baking for the foods.

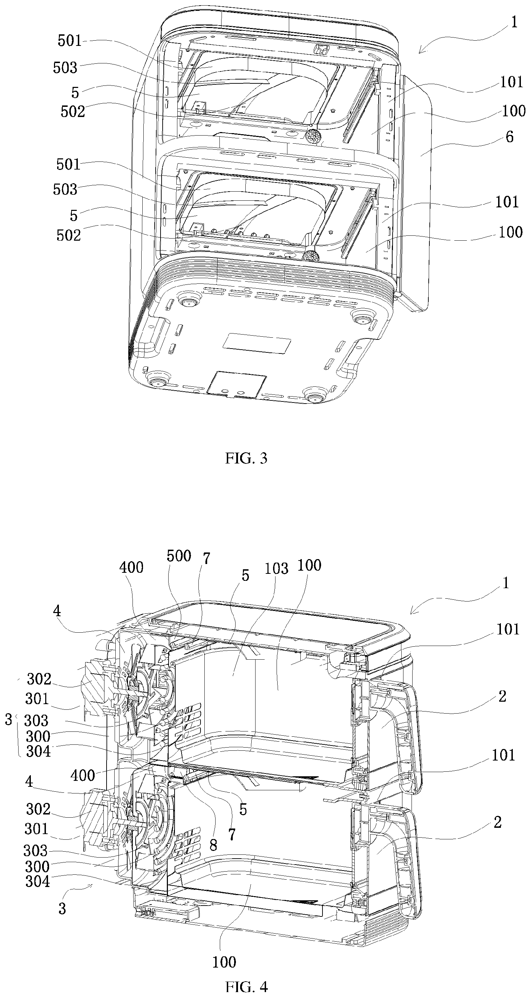

Illustratively, as shown in FIGS. 2 and 4, the electric control unit controls the electric heating element 300 to generate heat and controls the fan assembly 301 to form the heat around the electric heating element 300 into a hot airflow and blow up the hot airflow through the air outlet channel 4 and to the top of the cooking compartment 100 via the air outlet 400. The hot airflow at the top of the cooking compartment 100 moves down under the action of the airflow of the fan assembly 301 into the cooking compartment 100 and to the surfaces of the foods, and at the same time, the heat in the cooking compartment 100 is sucked by the fan assembly 301. Therefore, a hot airflow circulation is formed in the cooking compartment 100, so as to perform cyclic heating baking on the foods.

It is easily understood that the heat generated by the electric heating element 300 inevitably suffers loss in the airflow transmission path in which the heat runs through the air outlet channel 4 and out of the channel via the air outlet 400 such that the heat carried by the hot airflow at the top of the cooking compartment 100 is not sufficient or fails to meet the technical requirements of fast food baking. Therefore, in this embodiment, as shown in FIGS. 2 and 4, the air fryer further comprises at least one compensation heat source 7. Specifically, the top of the cooking compartment 100 is connected with the compensation heat source 7 disposed corresponding to the air outlet 400 to heat the airflow from the air outlet 400 and thus compensate the heat loss of the airflow.

In this embodiment, the fan assembly 301 of the air fryer forms the heat generated by the electric heating element 300 into a hot airflow and blows the hot airflow out of the air outlet 400 through the air outlet channel 4. It is unavoidable that an amount of heat loss may be brought to the hot airflow during the transmission process inside the air outlet channel 4. In the air fryer of the present disclosure, the compensation heat source 7 is disposed at a position which corresponds to the air outlet 400 and is at the top of the cooking compartment 100. The compensation heat source 7 can heat the airflow from the air outlet 400 to compensate the heat loss of the airflow such that the hot airflow reaching the top of the cooking compartment 100 can have a higher level of heat or energy. The hot airflow at the top of the cooking compartment 100 can perform fast baking on the foods upon moving down to the surfaces of the foods, thereby improving the baking efficiency and food taste. Therefore, the air fryer can compensate the heat loss of the airflow in transmission process and thus improve the baking efficiency and food taste.

The compensation heat source 7 is connected at the top of the cooking compartment 100 and disposed corresponding to the air outlet 400. Therefore, the compensation heat source 7 may be connected on a top wall of the cooking compartment 100 or connected at the air outlet 400 or in the air outlet 400. Specifically, in this embodiment, as shown in FIG. 4, the compensation heat source 7 is connected at the top of the cooking compartment 100 and located at a side close to the air outlet 400 such that the airflow from the air outlet 400 can directly contact with the compensation heat source 7 and thus be heated.

In this embodiment, the compensation heat source 7 is an electric heating tube, which specifically may be bent like U shape or hollow square shape. In other embodiments, the compensation heat source may also be an electric heating wire. When an airflow runs through, the airflow can be heated.

Furthermore, in this embodiment, as shown in FIG. 4, the fan assembly 301 comprises a motor 302 connected with the fryer body 1 and wind blades 303 disposed inside the air outlet channel 4 and connected with a rotary shaft of the motor 302. The through hole 304 in communication with the cooking compartment 100 is disposed on a sidewall of the air outlet channel 4 close to the cooking compartment 100. The electric heating element 300 is disposed inside the air outlet channel 4 and opposed to the fan assembly 301. Specifically, the air outlet channel 4 comprises vertically-disposed first plate piece and second plate piece. The second plate piece is located at a side close to the cooking compartment 100, and a space between the first plate piece and the second plate piece is formed into the upward-extending air outlet channel 4. The wind blades 303 of the fan assembly 301 and the electric heating element 300 are both located inside the air outlet channel 4. The through hole 304 in communication with the cooking compartment 100 is disposed on the second plate piece. Under the action of the rotation of the wind blades 303, the air or hot airflow in the cooking compartment 100 is sucked into the air outlet channel 4, and under the action of the wind blades 303, the air or hot airflow runs up through the air outlet channel 4 and then out of the air outlet 400. It can be easily understood that a lower end of the air outlet channel 4 is a closed end, which ensures the airflow in the air outlet channel 4 can run fast, improving the baking efficiency.

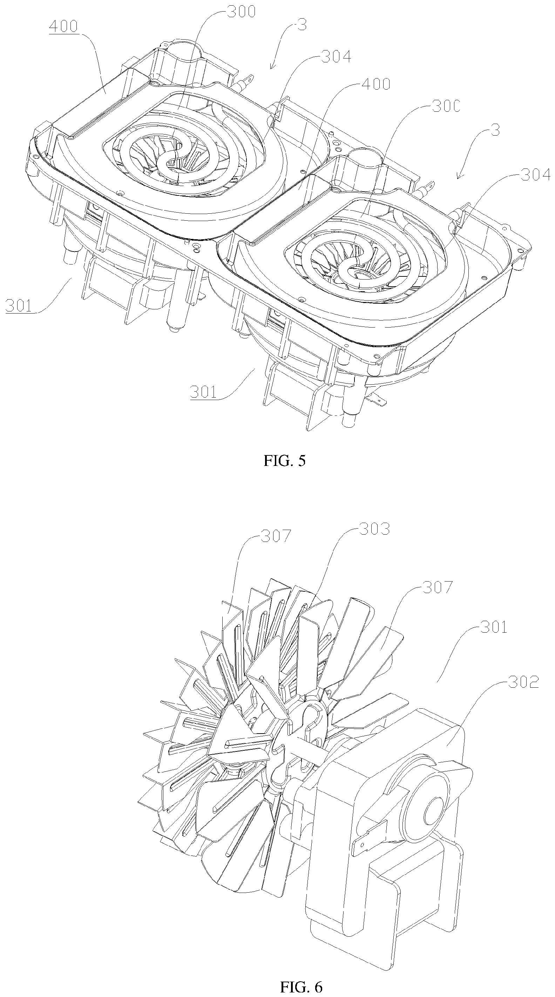

Furthermore, in this embodiment, the wind blades 303 of the fan assembly 301 are formed of at least two wind wheels 307 axially arranged. As shown in FIG. 6, two wind wheels 307 are axially arranged and respectively connected to the rotary shaft of the motor 302. The wind blades 303 can produce larger and stronger air at the same rotation speed as the fans in the prior arts so as to increase the airflow volume and airflow rate and improve the baking efficiency.

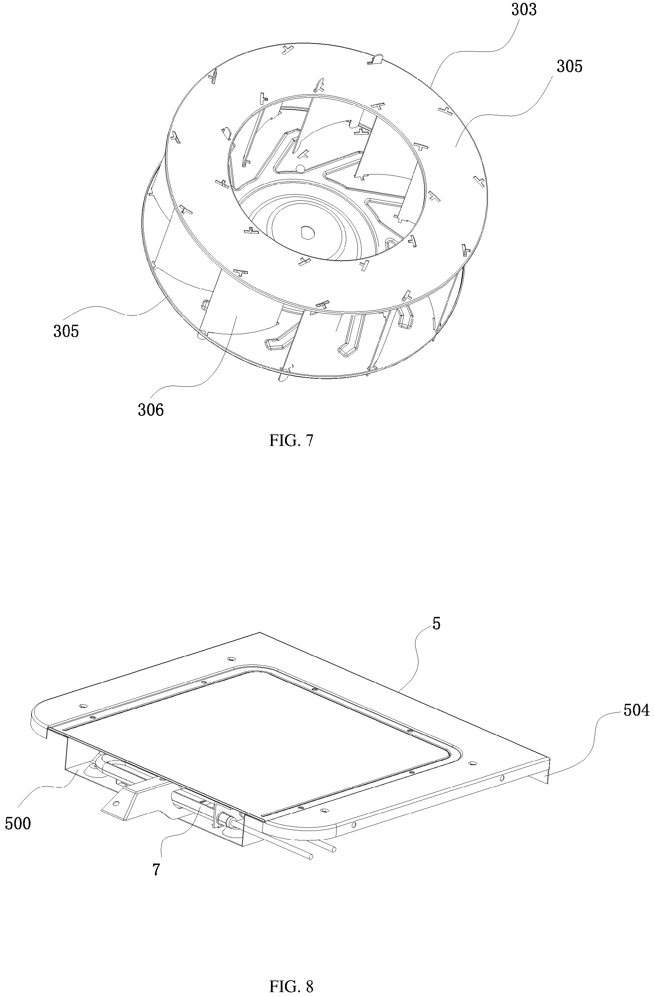

In other embodiments, as shown in FIG. 7, the wind blades 303 of the fan assembly 301 may also be axial flow wind blades 303 with its center aimed at the through hole 304 on the sidewall of the air outlet channel 4. It can be easily understood that a hole matching the through hole 304 on the air outlet channel 4 is opened on a back side of the liner 103 of the air fryer or the through hole 304 on the air outlet channel 4 and the hole on the back side of the liner 103 of the air fryer are the same one or share one through hole 304. A mesh cover may be covered on the through hole 304 to prevent foods from entering the fan assembly 301.

Illustratively, as shown in FIG. 7, the wind blades 303 comprise two axially-spaced annular plates 305, and a plurality of arc-shaped vanes 306 distributed circumferentially are connected between the two annular plates 305. A central hole of the annular plate 305 close to the cooking compartment 100 shares the same axis with the through hole 304, whereas a central hole of the annular plate 305 away from the cooking compartment 100 is connected with the rotary shaft of the motor 302. The wind blades 303 can produce larger and stronger air at the same rotation speed as the fans in the prior arts so as to increase the airflow volume and airflow rate and improve the baking efficiency.

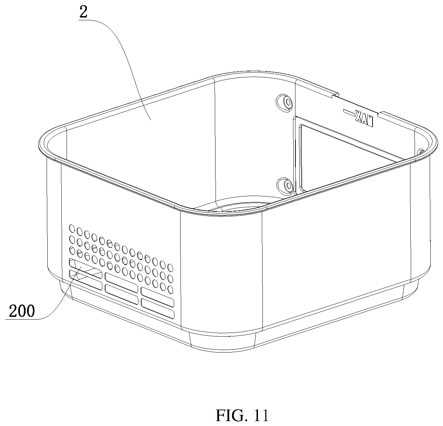

It can be understood that the frying basket 2 in this embodiment comprises a panel connected at the insertion opening 101, a food basket connected at an inner side of the panel to hold foods and a handle mounted on an outer sidewall of the panel. A transparent window may be connected on the panel. An outward-turning edge is disposed respectively at both sides of the top of the food basket, and a pair of insertion grooves extending along a depth direction of the cooking compartments 100 is disposed on two opposed inner sidewalls of each cooking compartment 100. The turning edges at both sides of the frying basket 2 may be slidably inserted into the pair of insertion grooves. A plurality of vent holes 200 are disposed at the back side of the food basket and located close to a lower part of the back side of the food basket, as shown in FIG. 11. In this way, the heat can run through the foods and make the foods at the bottom of the food basket easier to cook, thereby improving the baking efficiency.

It can be easily understood that the fan assembly 301 is mounted at the back side of the fryer body 1 and the airflow generated by the fan assembly 301 is blown to the top of the cooking compartment 100 through the air outlet channel 4 and the air outlet 400. An area closer to the fan assembly 301 at the top of the cooking compartment 100 has a larger air pressure and a faster air speed, whereas an area farther away from the fan assembly 301 has a smaller air pressure and a smaller air speed. In this case, the hot airflow heated by the electric heating element has different levels of heat or heat energy at the back and front of the cooking compartment 100, thus affecting the baking effect and efficiency for the foods. For this reason, in this embodiment, as shown in FIGS. 2, 3 and 4, a flow guide hood 5 for guiding down the airflow is connected at the top of the cooking compartment 100, and the flow guide hood 5 has an air inlet 500 in communication with the air outlet 400. The compensation heat source 7 is disposed at the air inlet 500. The hot airflow from the air outlet 400 enters the air inlet 500 of the flow guide hood 5 and is heated by the compensation heat source 7, and then under the action of the airflow, enters the flow guide hood 5, and then under the downward guiding action of the flow guide hood 5, moves downward into the cooking compartment 100. The flow guide hood 5 has an effect of quickly gathering the airflow and thus can increase an overall airflow pressure such that the airflow in the flow guide hood 5 can quickly and evenly move downward to the surfaces of the foods, improving the baking efficiency.

Specifically, in this embodiment, the flow guide hood 5 is circumferentially connected with a downward-extending baffle plate 501 and both ends of the baffle plate 501 are respectively connected with both sides of the air inlet 500, and thus a flow guide chamber corresponding to the air inlet 500 is enclosed with the baffle plate 501 on the flow guide hood 5. An end of the baffle plate 501 away from the air inlet 500 is disposed as arc-shaped. The hot airflow from the air inlet 500 enters the flow guide hood 5 and moves downward upon encountering the baffle plate 501. Furthermore, because the end of the baffle plate 501 away from the air inlet 500 is arc-shaped, after the airflow from the air outlet 400 enters the flow guide hood 5 via the air inlet 500, the heated or compensated hot airflow may generate a vortex or eddy current in the flow guide hood 5. In this way, the airflow at the back and front of the cooking compartment 100 has a consistent temperature, and also the air pressure can be increased to increase the downward moving speed of the hot airflow, achieving the effect of fast baking.

Furthermore, in this embodiment, as shown in FIGS. 8, 9 and 10, the flow guide hood 5 is connected on a top wall of the cooking compartment 100; a first flow guide plate 502 is connected in the flow guide chamber enclosed by the baffle plate 501. A first end of the first flow guide plate 502 is disposed in the middle of the air inlet 500 and extends toward the air outlet 400, and a second end of the first flow guide plate 502 extends toward an end of the flow guide chamber away from the air inlet 500 such that the flow guide chamber can be divided into a first flow guide chamber 506 and a second flow guide chamber 507 distributed left and right. The disposal of the first flow guide plate 502 can divide the airflow entering the air inlet 500 into two parts so as to avoid a centralized airflow and a local high temperature in the flow guide chamber.

In a preferred embodiment, the first end of the first flow guide plate 502 is disposed in the center of the air inlet 500 such that the airflow entering the air inlet 500 can be equally divided into two parts, making uniform the airflow temperature in the flow guide chamber.

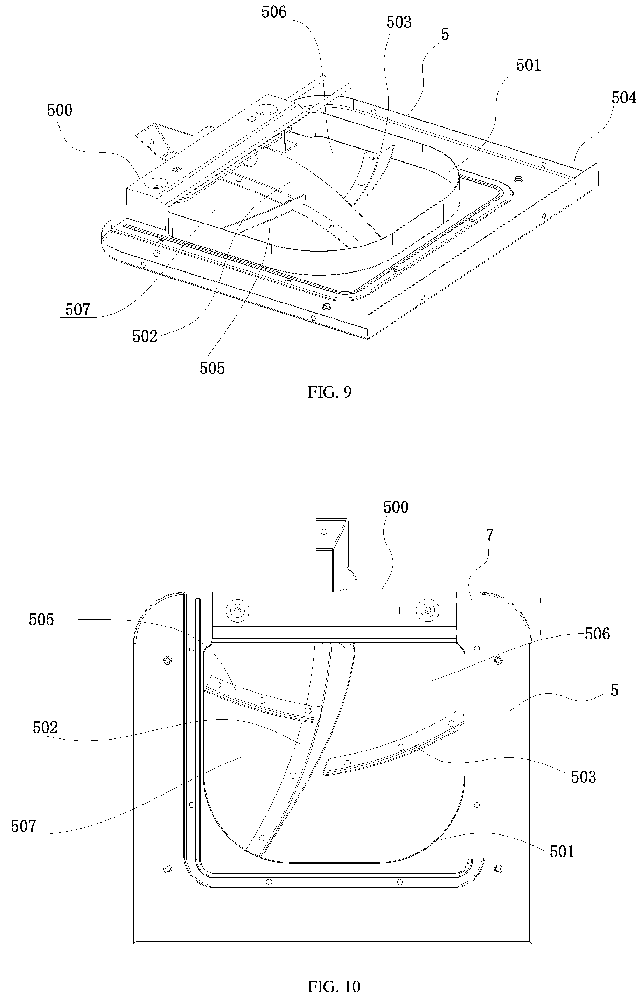

It can be easily understood that the airflow heated by the compensation heat source 7 is quickly centralized at the side of the flow guide chamber away from the air inlet 500 under the action of the air pressure of the air outlet 400, lowering the temperature of the side of the flow guide chamber close to the air inlet 500 and increasing the temperature of the side of the flow guide chamber away from the air inlet 500. In this case, the airflow temperature in the cooking compartment is not uniform, affecting the baking effect. In this embodiment, as shown in FIGS. 9 and 10, the first flow guide plate 502 is disposed as arc-shaped along an air incoming direction of the air inlet 500 and specifically, the second end of the first flow guide plate 502 is bent toward the second flow guide chamber 507. A second flow guide plate 503 for blocking at least a part of the airflow is connected in the first flow guide chamber 506, and the second flow guide plate 503 is disposed along a transverse direction of the first flow guide chamber 506, and further, a distance of an inner end of the second flow guide plate 503 from the air inlet 500 is greater than a distance of an outer end of the second flow guide plate 503 from the air inlet 500. A third flow guide plate 505 for blocking at least a part of the airflow is connected in the second flow guide chamber 507, and the third flow guide plate 505 is disposed along a transverse direction of the second flow guide chamber 507, and further, a distance of an inner end of the third flow guide plate 505 from the air inlet 500 is greater than a distance of an outer end of the third flow guide plate 505 from the air inlet 500. With this disposal, the second flow guide plate 503 and the third flow guide plate 505 can block at least a part of the airflow so as to prevent all of the airflow flowing to the side of the flow guide chamber away from the air inlet 500 and thus adjust the airflow temperature in the flow guide chamber, thereby making uniform the airflow temperature in the cooking compartment and achieving better baking effect.

In this embodiment, the second flow guide plate 503 and the third flow guide plate 505 are both lower than the first flow guide plate 502, so as to block at least a part of the airflow.

Furthermore, in this embodiment, as shown in FIGS. 8 and 9, the flow guide hood 5 comprises a base plate and a fixing plate connected within the base plate. The fixing plate is connected on the base plate and the baffle plate 501 is connected on the fixing plate. An air blocking part 504 bending down and extending is disposed at a side of the base plate close to the insertion opening 101. The disposal of the air blocking part 504 can achieve the effect of gathering heat and preventing the hot airflow blowing toward the insertion opening 101 such that the hot airflow can quickly move down to the surfaces of the foods.

By referring to FIGS. 1 to 4 again, in this embodiment, the air fryer is a double-basket air fryer. Specifically, there are two cooking compartments 100 which are distributed sequentially along a height direction of the liner 103; there are two frying baskets which are respectively connected in the two cooking compartments 100 through the insertion openings 101. Furthermore, there are two heating assemblies 3 which are respectively disposed corresponding to the two cooking compartments 100. Each heating assembly 3 comprises a fan assembly 301 and an electric heating element 300. There are two compensation heat sources 7 which are respectively connected at the tops of the two cooking compartments 100. In the embodiment of the double-basket air fryer, the flow guide hood 5 located above is connected with the top of the liner 103, and the flow guide hood 5 located below is connected to a bottom of a middle transverse partition plate in a middle part of the liner 103. Further, the flow guide hood 5 located below and the middle transverse partition plate together divide the liner 103 into upper and lower independent cooking compartments 100, avoiding taste interference between the foods in the two cooking compartments 100.

In other embodiments, there may also be three or four cooking compartments 100 and so on, which are distributed along the height direction of the fryer body 1. Similarly, in other embodiments, the cooking compartments 100 may also be distributed sequentially along a width direction of the dryer body 1 and thus the fryer body 1 has a single-layer multi-compartment structure. In other embodiments, the air fryer may also be a single-basket air fryer, or a three-basket air fryer. For the single-basket air fryer, there is only one cooking compartment 100, one frying basket 2, one heating assembly 3 and one compensation heat source 7 and the like. In contrast, the three-basket air fryer may correspond to three cooking compartments 100, three frying baskets 2 and three heating assemblies 3 or two heating assemblies 3 or the like.

In some embodiments, as shown in FIG. 1, a recess 102 is disposed at an outer sidewall of the fryer body 1, and a control panel 6 movable back and forth is rotatably connected in the recess 102. In this case, the control panel 6 can rotatably protrude out of the recess 102 during use and retract or fold into the recess 102 after use. With this disposal, the user can easily operate it at different angles and the space in the housing can be further saved. At the time of use, the control panel may be unfolded while kept away from heat sources to help dissipate heat.

In the descriptions of the present disclosure, the descriptions made by referring to the terms "one embodiment", "some embodiments" "an example", "specific example" or "some examples" or the like mean that the specific features, structures, materials or characteristics described in combination with this embodiment or example are incorporated in at least one embodiment or example of the present disclosure. In this specification, the illustrative expressions of the above terms are not necessarily directed to same embodiment or example. Furthermore, the described specific features, structures, materials or characteristics may be combined in an appropriate way in one or more embodiments or examples.

The above descriptions are only about the specific embodiments of the present disclosure but the scope of protection of the present disclosure is not limited hereto. All changes or substitutions those skilled in the arts can easily conceive of within the technical scope of the present disclosure shall fall within the scope of protection of the present disclosure. Therefore, the scope of protection of the present disclosure shall be indicated by the claims.

## Claims

1. An air fryer, wherein the air fryer comprises:
a fryer body (1), having at least one cooking compartment (100) and an insertion opening (101) being in communication with the cooking compartment (100) and provided for a frying basket (2) to be pushed into or pulled out of the cooking compartment (100);
at least one heating assembly (3), connected at a side of the fryer body (1) away from the insertion opening (101) and disposed corresponding to the cooking compartment (100), and the heating assembly (3) comprises an electric heating element (300) and a fan assembly (301), and the fan assembly (301) has an air outlet channel (4) and an air outlet (400) disposed on the air outlet channel (4);
at least one compensation heat source (7), disposed at a top of the cooking compartment (100) and opposed to the air outlet (400) to heat an airflow from the air outlet (400) to compensate a heat loss of the airflow.

2. The air fryer of claim 1, wherein the compensation heat source (7) is connected at the top of the cooking compartment (100) and close to the air outlet (400).

3. The air fryer of claim 2, wherein a flow guide hood (5) for guiding down the airflow is connected at the top of the cooking compartment (100), and the flow guide hood (5) has an air inlet (500) in communication with the air outlet (400), and the compensation heat source (7) is disposed at the air inlet (500).

4. The air fryer of claim 3, wherein the flow guide hood (5) is circumferentially connected with a downward-extending baffle plate (501), and both ends of the baffle plate (501) are connected with both sides of the air inlet (500) and a flow guide chamber corresponding to the air inlet (500) is enclosed with the baffle plate (501) on the flow guide hood (5).

5. The air fryer of claim 4, wherein a first flow guide plate (502) is connected in the flow guide chamber; a first end of the first flow guide plate (502) is disposed in the middle of the air inlet (500), and a second end of the first flow guide plate (502) extends toward an end of the flow guide chamber away from the air inlet (500) to divide the flow guide chamber into a first flow guide chamber (506) and a second flow guide chamber (507) distributed left and right.

6. The air fryer of claim 5, wherein the first flow guide plate (502) is disposed as arc-shaped along an air incoming direction of the air inlet (500); a second flow guide plate (503) for blocking at least a part of the airflow is connected in the first flow guide chamber (506), the second flow guide plate (503) is disposed along a transverse direction of the first flow guide chamber (506), and a distance of an inner end of the second flow guide plate (503) from the air inlet (500) is greater than a distance of an outer end of the second flow guide plate (503) from the air inlet (500); a third flow guide plate (505) for blocking at least a part of the airflow is connected in the second flow guide chamber (507), and the third flow guide plate (505) is disposed along a transverse direction of the second flow guide chamber (507); a distance of an inner end of the third flow guide plate (505) from the air inlet (500) is greater than a distance of an outer end of the third flow guide plate (505) from the air inlet (500).

7. The air fryer of claim 1, wherein the fan assembly (301) is connected at a side of the electric heating element (300) away from the cooking compartment (100), and the fan assembly (301) comprises a motor (302) connected with the fryer body (1) and wind blades (303) disposed in the air outlet channel (4) and connected with a rotary shaft of the motor (302); the electric heating element (300) is disposed in the air outlet channel (4), and a through hole (304) in communication with the cooking compartment (100) is disposed on a sidewall of the air outlet channel (4) close to the cooking compartment (100); the air outlet channel (4) extends up along a height direction of the fryer body (1) and an upper end of the air outlet channel (4) is formed into the air outlet (400).

8. The air fryer of claim 7, wherein the wind blades (303) comprise at least two wind wheels (307) axially arranged; or the wind blades (303) comprise two axially-spaced annular plates (305), and a plurality of circumferentially-distributed arc-shaped vanes (306) are connected between the two annular plates (305).

9. The air fryer of any one claim of claims 1-8, wherein there are two cooking compartments (100) which are sequentially distributed along a height or width direction of the fryer body (1); there are two heating assemblies (3) which are respectively disposed corresponding to the two cooking compartments (100); there are two compensation heat sources (7) which are respectively connected at the tops of the two cooking compartments (100); the compensation heat sources (7) may be electric heating tubes or electric heating wires.

10. The air fryer of claim 1, wherein a recess (102) is disposed on the housing and a control panel (6) movable back and forth is connected rotatably in the recess (102).

## Amended claims

### Amended claims in accordance with Rule 137(2) EPC.

1. An air fryer, wherein the air fryer comprises:
a fryer body (1), having at least one cooking compartment (100) and an insertion opening (101) being in communication with the cooking compartment (100) and provided for a frying basket (2) to be pushed into or pulled out of the cooking compartment (100);
at least one heating assembly (3), connected at a side of the fryer body (1) away from the insertion opening (101) and disposed corresponding to the cooking compartment (100), and the heating assembly (3) comprises an electric heating element (300) and a fan assembly (301), and the fan assembly (301) has an air outlet channel (4) and an air outlet (400) disposed on the air outlet channel (4);
at least one compensation heat source (7), disposed at a top of the cooking compartment (100) and opposed to the air outlet (400) to heat an airflow from the air outlet (400) to compensate a heat loss of the airflow;
the compensation heat source (7) is connected at the top of the cooking compartment (100) and close to the air outlet (400);
a flow guide hood (5) for guiding down the airflow is connected at the top of the cooking compartment (100), and the flow guide hood (5) has an air inlet (500) in communication with the air outlet (400), and the compensation heat source (7) is disposed at the air inlet (500);
the flow guide hood (5) is circumferentially connected with a downward-extending baffle plate (501), and both ends of the baffle plate (501) are connected with both sides of the air inlet (500) and a flow guide chamber corresponding to the air inlet (500) is enclosed with the baffle plate (501) on the flow guide hood (5);
**characterized in that:**
a first flow guide plate (502) is connected in the flow guide chamber; a first end of the first flow guide plate (502) is disposed in the middle of the air inlet (500), and a second end of the first flow guide plate (502) extends toward an end of the flow guide chamber away from the air inlet (500) to divide the flow guide chamber into a first flow guide chamber (506) and a second flow guide chamber (507) distributed left and right.

2. The air fryer of claim 1, wherein the first flow guide plate (502) is disposed as arc-shaped along an air incoming direction of the air inlet (500); a second flow guide plate (503) for blocking at least a part of the airflow is connected in the first flow guide chamber (506), the second flow guide plate (503) is disposed along a transverse direction of the first flow guide chamber (506), and a distance of an inner end of the second flow guide plate (503) from the air inlet (500) is greater than a distance of an outer end of the second flow guide plate (503) from the air inlet (500); a third flow guide plate (505) for blocking at least a part of the airflow is connected in the second flow guide chamber (507), and the third flow guide plate (505) is disposed along a transverse direction of the second flow guide chamber (507); a distance of an inner end of the third flow guide plate (505) from the air inlet (500) is greater than a distance of an outer end of the third flow guide plate (505) from the air inlet (500).

3. The air fryer of claim 1, wherein the fan assembly (301) is connected at a side of the electric heating element (300) away from the cooking compartment (100), and the fan assembly (301) comprises a motor (302) connected with the fryer body (1) and wind blades (303) disposed in the air outlet channel (4) and connected with a rotary shaft of the motor (302); the electric heating element (300) is disposed in the air outlet channel (4), and a through hole (304) in communication with the cooking compartment (100) is disposed on a sidewall of the air outlet channel (4) close to the cooking compartment (100); the air outlet channel (4) extends up along a height direction of the fryer body (1) and an upper end of the air outlet channel (4) is formed into the air outlet (400).

4. The air fryer of claim 3, wherein the wind blades (303) comprise at least two wind wheels (307) axially arranged; or the wind blades (303) comprise two axially-spaced annular plates (305), and a plurality of circumferentially-distributed arc-shaped vanes (306) are connected between the two annular plates (305).

5. The air fryer of any one claim of claims 1-4, wherein there are two cooking compartments (100) which are sequentially distributed along a height or width direction of the fryer body (1); there are two heating assemblies (3) which are respectively disposed corresponding to the two cooking compartments (100); there are two compensation heat sources (7) which are respectively connected at the tops of the two cooking compartments (100); the compensation heat sources (7) may be electric heating tubes or electric heating wires.

6. The air fryer of claim 1, wherein a recess (102) is disposed on the housing and a control panel (6) movable back and forth is connected rotatably in the recess (102).
